# EUROPEAN PATENT APPLICATION

(11) **EP 4 796 828 A1**
(43) Date of publication of application: **26.08.2026**
(21) Application number: 25196247.8
(22) Date of filing: 15.08.2025
(51) Int. Cl.: F16M 11/10, F16M 13/00

(54) **BRACKET AND ELECTRONIC DEVICE**

(30) Priority: 21.02.2025 CN 202510195237
(71) Applicant: Getac Technology Corporation, New Taipei City 221009 (TW)
(72) Inventor: LU, Wei-Sen, 11568 Taipei City (TW)
(74) Representative: Viering, Jentschura & Partner mbB Patent- und Rechtsanwälte

(57) **Abstract**

A bracket includes a pivot portion and a supporting portion. The pivot portion is rotatably coupled to a side surface of a housing of an electronic device. The supporting portion is coupled to the housing through the pivot portion. The supporting portion has a first portion, a second portion, and a third portion. The first portion is connected to the pivot portion. The second portion connects the first portion and the third portion. When the supporting portion is at a folded position relative to the housing, the first portion is on the side surface of the housing, and the third portion is on a back surface of the housing.

## Description

### BACKGROUND

### Field of Disclosure

The present disclosure relates to a bracket and an electronic device.

### Description of Related Art

Electronic devices such as tablet computers are becoming more widely used in the workplace due to their lightness and portability. In order to satisfy the requirements in different scenarios, electronic devices require more stable stands to avoid sliding, shaking, or tipping over during video conferencing or frequent interaction via touch. Also, more portable designs are needed to facilitate storage, carrying, and quick setup for use upon on-site.

Accordingly, how to provide a bracket and an electronic device to solve the aforementioned problems becomes an important issue to be solved by those in the industry.

### SUMMARY

An aspect of the disclosure is to provide a bracket and an electronic device that may efficiently solve the aforementioned problems.

According to an embodiment of the disclosure, a bracket includes a pivot portion and a supporting portion. The pivot portion is rotatably coupled to a side surface of a housing of an electronic device. The supporting portion is coupled to the housing through the pivot portion. The supporting portion has a first portion, a second portion, and a third portion. The first portion is connected to the pivot portion. The second portion connects the first portion and the third portion. When the supporting portion is at a folded position relative to the housing, the first portion is on the side surface of the housing, and the third portion is on a back surface of the housing.

In an embodiment of the disclosure, the pivot portion is configured to rotate between about 0 degrees and about 180 degrees.

In an embodiment of the disclosure, the first portion and the third portion extend in opposite directions relative to the second portion.

In an embodiment of the disclosure, the first portion is substantially perpendicular to the third portion.

In an embodiment of the disclosure, the bracket further includes a fixing portion. The fixed portion is coupled to the pivot portion and configured to be coupled to a corner of the housing.

According to another embodiment of the disclosure, an electronic device includes a housing and a bracket. The housing has a back surface and has a first side surface and a second side surface that are adjacent to each other. The bracket is coupled to the housing. The bracket includes a first pivot portion and a supporting portion. The first pivot portion is on the first side surface and rotatably coupled to the housing. The supporting portion is coupled to the housing through the first pivot portion. The supporting portion has at least one first portion, at least one second portion, and at least one third portion. A first one of the at least one first portion is connected to the first pivot portion. A first one of the at least one second portion connects the first one of the at least one first portion and a first one of the at least one third portion. When the supporting portion is at a folded position relative to the housing, the first one of the at least one first portion is on the first side surface, and the first one of the at least one third portion is on the back surface.

In an embodiment of the disclosure, the bracket further includes a fixing portion. The fixing portion extends from the first side surface to the second side surface. The first pivot portion is coupled to the housing through the fixing portion.

In an embodiment of the disclosure, the fixing portion extends from a front surface of the housing to the back surface. The front surface is opposite to the back surface.

In an embodiment of the disclosure, a height of the fixing portion protruding from the back surface is greater than or substantially equal to a height of the third portion protruding from the back surface.

In an embodiment of the disclosure, the fixing portion is fixed to the housing through a fixing element.

In an embodiment of the disclosure, when the supporting portion is at an expanded position relative to the housing, a surface of the first one of the at least one third portion is higher than a front surface of the housing. The front surface is opposite to the back surface.

In an embodiment of the disclosure, a distance is between the surface of the first one of the at least one third portion and the front surface of the housing.

In an embodiment of the disclosure, the surface of the first one of the at least one third portion is substantially parallel to the front surface of the housing.

In an embodiment of the disclosure, when the supporting portion is at a supporting position relative to the housing, the electronic device abuts against a flat surface through the at least one third portion.

In an embodiment of the disclosure, the bracket further includes a second pivot portion. The second pivot portion is rotatably coupled to the housing. The supporting portion further has a fourth portion. The at least one first portion is a plurality of first portions, the at least one second portion is a plurality of second portions, and the at least one third portion is a plurality of third portions. A second one of the plurality of first portions is connected to the second pivot portion. A second one of the plurality of second portions connects the second one of the plurality of first portions and a second one of the plurality of third portions. The fourth portion connects the first one and the second one of the plurality of third portions.

In an embodiment of the disclosure, when the supporting portion is at the folded position relative to the housing, the first one and the second one of the plurality of third portions are on the back surface and extend along a lengthwise direction of the first side surface, and the fourth portion is on the back surface and extends along a lengthwise direction of the second side surface.

In an embodiment of the disclosure, the housing further has a corner. The bracket further includes a fixing portion. The fixing portion is disposed at the corner. The first pivot portion is coupled to the housing through the fixing portion.

According to yet another embodiment of the disclosure, an electronic device includes a housing and a bracket. The housing has a back surface and has a first side surface and a second side surface that are adjacent to each other. The bracket is coupled to the housing. The bracket includes a pivot portion and a supporting portion. The pivot portion is on the first side surface and rotatably coupled to the housing. The supporting portion is coupled to the housing through the pivot portion. When the supporting portion is at a folded position relative to the housing, at least one portion of the supporting portion is on the first side surface, and another portion of the supporting portion is on the back surface.

Accordingly, in the bracket and the electronic device of some embodiments of the present disclosure, by coupling the supporting portion of the bracket to the corners of the housing of the electronic device (such as the upper left corner and the upper right corner) and allowing the supporting portion to be at a plurality of different positions relative to the housing, the electronic device can have a highly stable support to prevent the electronic device from tipping over or sliding when the bracket is used as a stand of the electronic device. At the same time, this design also allows the bracket to be used as a grip of the electronic device, making it convenient for the user to use when carrying the electronic device. Compared with common brackets and electronic devices, the bracket and the electronic device of the present disclosure are suitable for various usage scenarios, such as offices, factories, and outdoor occasions, which not only improve the stability of the electronic device, but also increase its portability and flexibility of use.

It is to be understood that both the foregoing general description and the following detailed description are by examples and are intended to provide further explanation of the disclosure as claimed.

### BRIEF DESCRIPTION OF THE DRAWINGS

The disclosure can be more fully understood by reading the following detailed description of the embodiment, with reference made to the accompanying drawings as follows:
FIG. 1 and FIG. 2 are perspective views of an electronic device according to an embodiment of the present disclosure;
FIG. 3 and FIG. 4 are side views of an electronic device according to an embodiment of the present disclosure;
FIG. 5 and FIG. 6 are perspective views of an electronic device according to another embodiment of the present disclosure; and
FIG. 7, FIG. 8, and FIG. 9 are side views of an electronic device according to another embodiment of the present disclosure.

### DETAILED DESCRIPTION

Reference will now be made in detail to the present embodiments of the disclosure, examples of which are illustrated in the accompanying drawings. Wherever possible, the same reference numbers are used in the drawings and the description to refer to the same or like parts. However, specific structural and functional details disclosed herein are merely representative for purposes of describing example embodiments, and thus may be embodied in many alternate forms and should not be construed as limited to only example embodiments set forth herein. Therefore, it should be understood that there is no intent to limit example embodiments to the particular forms disclosed, but on the contrary, example embodiments are to cover all modifications, equivalents, and alternatives falling within the scope of the disclosure.

In the drawings, thicknesses of layers, films, panels, regions, etc., are exaggerated for clarity. It should be understood that when an element such as a layer, a film, a region, or a substrate is described as being "on" or "connected to" another element, it can be directly on or connected to the other element, or intermediate elements may also be present. In contrast, when an element is described as being "directly on" or "directly connected to" another element, there are no intermediate elements present. As used herein, "connected" may refer to physical and/or electrical connections. Furthermore, "electrically connected" or "coupled" can indicate the presence of other elements between the two elements.

The terms used herein are merely for the purpose of describing specific embodiments and are not intended to be limiting. As used herein, the singular forms "a," "an," and "the" are intended to include the plural forms, including "at least one," unless the context clearly indicates otherwise. "Or" indicates "and/or." As used herein, the term "and/or" includes any and all combinations of one or more of the associated listed items. It should also be understood that when used in the specification, the terms "comprising" and/or "including" specify the presence of said features, regions, entities, steps, operations, elements and/or components, but do not exclude the presence or addition of one or more other features, regions, entities, steps, operations, elements, components, and/or combinations thereof.

Furthermore, spatially relative terms, such as "beneath," "below," "lower," "above," "over," "upper," and the like, may be used herein for ease of description to describe one element or feature's relationship to another element(s) or feature(s) as illustrated in the drawings. It should be understood that the spatially relative terms are intended to encompass different orientations of the device in use or operation in addition to the orientation depicted in the drawings. The device may be otherwise oriented (rotated 90 degrees or at other orientations) and the spatially relative descriptors used herein may likewise be interpreted accordingly.

The terms "about," "approximately," "substantially," and the like as used herein are inclusive of the stated value and the average value within an acceptable deviation range determined by those skilled in the art, considering the measurement in question and the measurement-related errors of the particular quantity (i.e., the limitations of the measurement system). For example, "about" can indicate within one or more standard deviations, or within ±30%, ±20%, ±10%, or ±5% of the stated value. Furthermore, a relatively acceptable deviation range or standard deviation may be chosen for the terms "about," "approximately," "substantially," and the like as used herein based on optical properties, etching properties, or other properties, rather than a single standard deviation applied to all properties.

Exemplary embodiments are described herein with reference to cross-sectional views that are schematic diagrams of idealized embodiments. As such, variations in the shapes of the illustrations may be expected, for example, as a result of manufacturing techniques and/or tolerances. Accordingly, the embodiments described in this disclosure should not be construed as limited to the specific shapes of regions as illustrated herein, but should include deviations in shapes due to, for example, manufacturing. For example, regions illustrated or described as flat may, typically, have rough and/or nonlinear features. Moreover, sharp angles illustrated may be rounded. Thus, the regions illustrated in the drawings are inherently schematic, and their shapes are not intended to depict the precise shape of a region and are not intended to limit the scope of the claims.

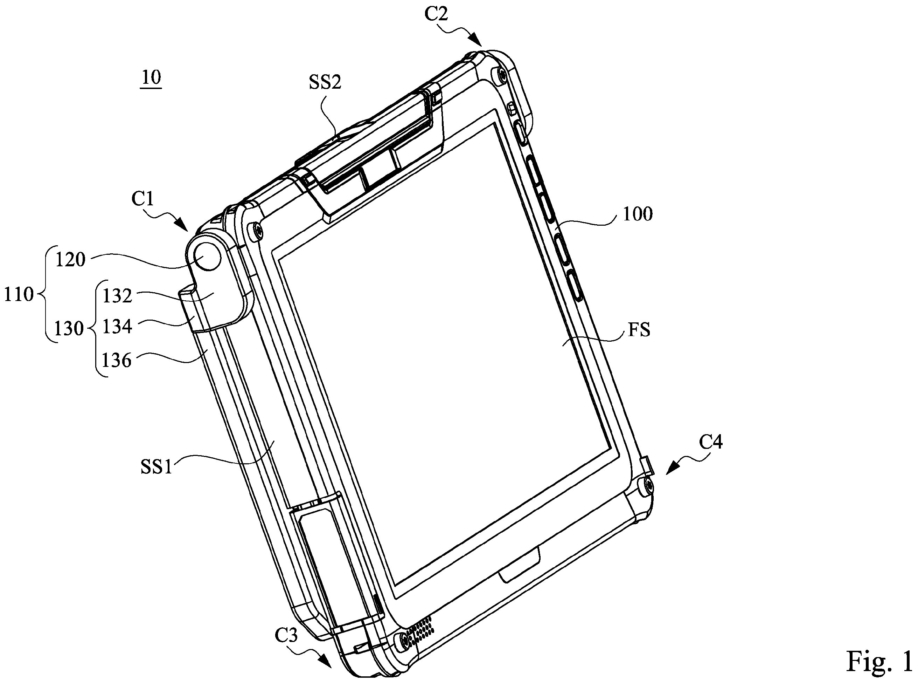

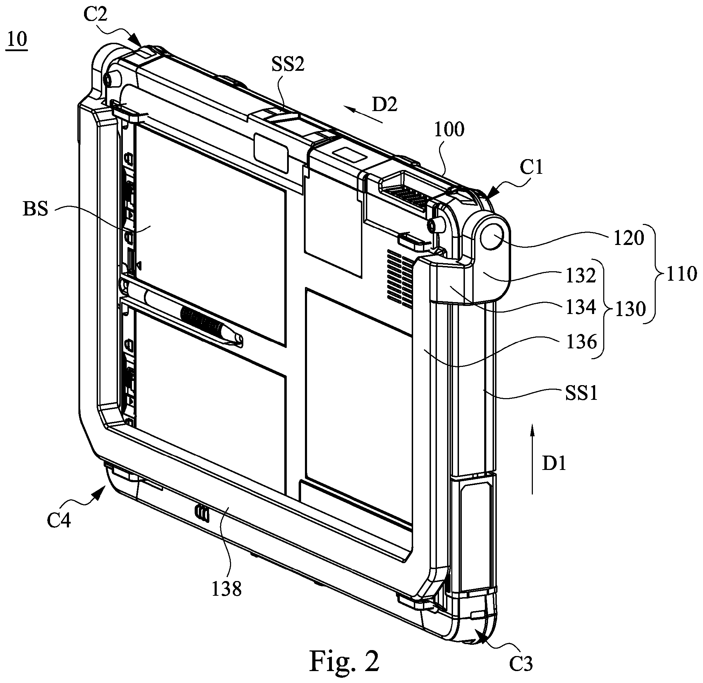

Reference is made to FIG. 1 and FIG. 2, which are perspective views of an electronic device 10 according to an embodiment of the present disclosure, shown from different viewing angles. The electronic device 10 includes a housing 100 and a bracket 110. The bracket 110 is coupled to the housing 100. The electronic device 10 is, for example, a tablet computer or a display.

In greater detail, as shown in FIG. 1 and FIG. 2, the housing 100 has a front surface FS and a back surface BS that are opposite to each other. The front surface FS is a display surface or a touch surface for user operation. In addition, the housing 100 has a first side surface SS1 and a second side surface SS2 that are adjacent to and connected to each other. The first side surface SS1 and the second side surface SS2 are connected to the front surface FS and the back surface BS, respectively. The housing 100 also has a corner C1, a corner C2, a corner C3, and a corner C4. The corner C1 is the junction of the front surface FS, the back surface BS, the first side surface SS1, and the second side surface SS2. The structures of the housing 100 and the bracket 110 are described in following paragraphs by taking the structures around the first side surface SS1, the second side surface SS2, and the corner C1 as examples. It should be understood that the structure of the bracket 110 may be symmetrical so that the bracket 110 has similar features around the corner C2 as the described features around the corner C1.

As shown in FIG. 1 and FIG. 2, the bracket 110 includes two pivot portions 120 and a supporting portion 130.

The two pivot portions 120 are rotatably coupled to the corner C1 and the corner C2 of the housing 100 of the electronic device 10, respectively. In greater detail, each of the two pivot portions 120 may be on a side surface of the housing 100. For example, one of the two pivot portions 120 is on the first side surface SS1. The supporting portion 130 is connected between the two pivot portions 120. The supporting portion 130 is coupled to the housing 100 through the pivot portions 120.

In an embodiment, the pivot portions 120 are configured to rotate between about 0 degrees and about 180 degrees, so that the supporting portion 130 can be at a plurality of different positions relative to the housing 100. In an embodiment, each of the pivot portions 120 includes a ratchet to provide functions of one-way locking and multi-stage adjustment through its tooth spacing, so that the supporting portion 130 can be held at a fixed angle relative to the housing 100. Embodiments of the supporting portion 130 at different positions relative to the housing 100 will be described in detail in following paragraphs.

The supporting portion 130 has two first portions 132, two second portions 134, two third portions 136, and a fourth portion 138, forming a substantially U-shaped structure. In greater detail, the two first portions 132, the two second portions 134, and the two third portions 136 are on two sides of the housing 100, respectively, and the fourth portion 138 spans across the back surface BS of the housing 100 to connect the two third portions 136. Each of the second portions 134 connects its corresponding one of the first portions 132 and its corresponding one of the third portions 136 on its side. Each of the first portions 132 is directly connected to its corresponding one of the pivot portions 120.

As shown in FIG. 1 and FIG. 2, the structures around the corner C1 are taken as examples. When the supporting portion 130 is at a folded position relative to the housing 100, the first portion 132 is on a side surface of the housing 100, such as the first side surface SS1. In other words, the first portion 132 is on the outside (i.e., exterior) of the housing 100. The third portion 136 and the fourth portion 138 are on the back surface BS of the housing 100. The second portion 134 may extend from the side surface of the housing 100, such as the first side surface SS1, to the back surface BS. In an embodiment, the first portion 132 and the third portion 136 extend in opposite directions relative to the second portion 134. For example, when the supporting portion 130 is at the folded position, the first portion 132 extends along a positive direction of a direction D1 from the connection between the first portion 132 and the second portion 134 toward the pivot portion 120 and the corner C1. In an embodiment, the first portion 132 extends along the first side surface SS1 as well. Meanwhile, the third portion 136 extends along a negative direction of the direction D1from the connection between the third portion 136 and the second portion 134 toward the corner C3. In an embodiment, the third portion 136 extends along the back surface BS as well.

In an embodiment, since the first side surface SS1 is substantially perpendicular to the back surface BS, the first portion 132 extending along the first side surface SS1 is substantially perpendicular to the third portion 136 extending along the back surface BS.

In an embodiment, when the supporting portion 130 is at the folded position relative to the housing 100 and is placed on a flat surface such as a desktop or a suitable countertop with the front surface FS facing upward, the electronic device 10 can still be placed stably on the flat surface since the third portion 136 extends on the back surface BS substantially along a lengthwise direction of the first side surface SS1 (i.e., substantially along the direction D1 shown in FIG. 2), and the fourth portion 138 extends on the back surface BS substantially along a lengthwise direction of the second side surface SS2 (i.e., substantially along a direction D2 shown in FIG. 2). As such, it is convenient for the user to manipulate the front surface FS of the electronic device 10.

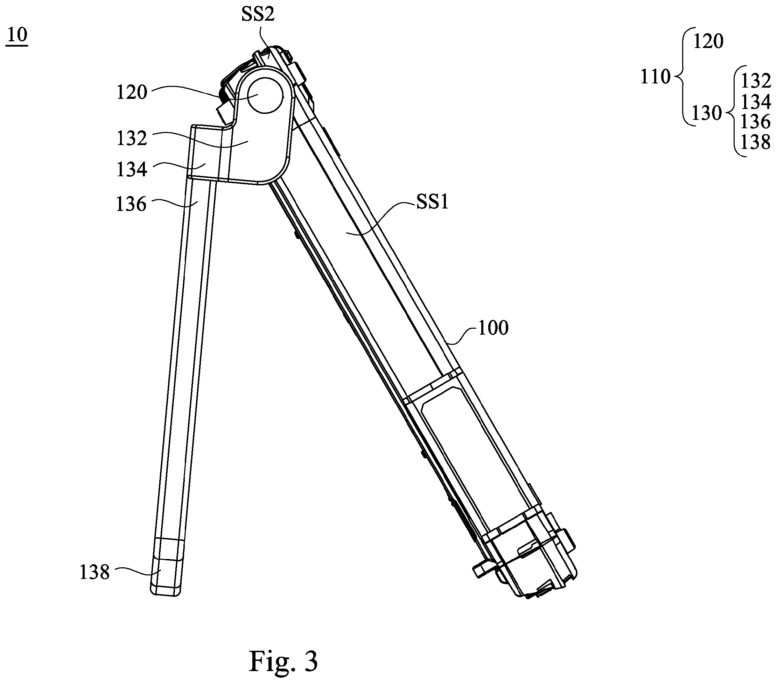

Reference is made to FIG. 3, which is a side view of the electronic device 10 when the supporting portion 130 is at a supporting position relative to the housing 100 according to an embodiment of the present disclosure. When the supporting portion 130 is at the supporting position relative to the housing 100, the supporting portion 130 abuts against a flat surface through the third portion 136 and the fourth portion 138 to serve as a stand of the electronic device 10. At this moment, an included angle between the third portion 136 of the supporting portion 130 and the housing 100 is, for example, an acute angle. In such case, the first portion 132 is still on the side surface such as the first side surface SS1. In other words, the first portion 132 is still on the outside of the housing 100. Meanwhile, the third portion 136 and the fourth portion 138 are still at the rear side of the housing 100. Since the bracket 110 is coupled to the corner C1 and the corner C2 of the upper of the housing 100 (referring to FIG. 1 and FIG. 2) through the pivot portions 120, a larger lever arm can be provided, thereby reducing the force required for maintaining stability. Such design can improve the stability of the bracket 110 and prevent the electronic device 10 from tipping over.

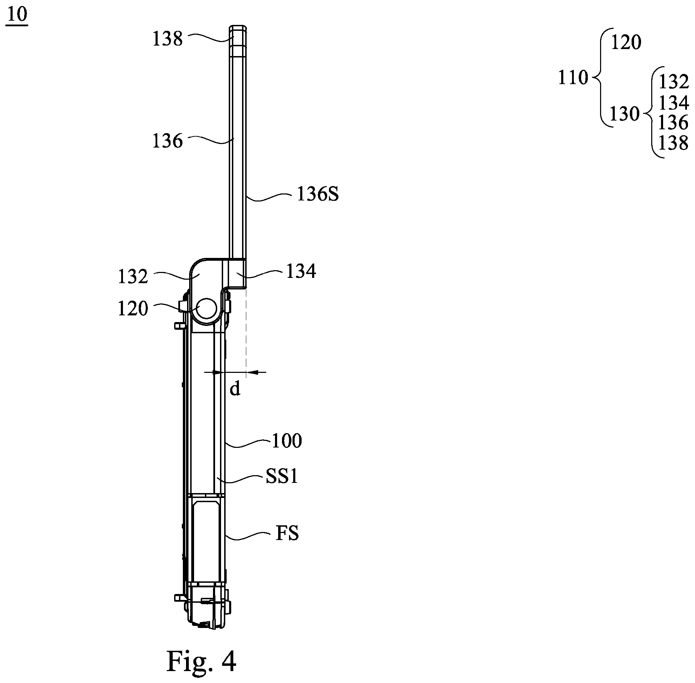

Reference is made to FIG. 4, which is a side view of the electronic device 10 when the supporting portion 130 is at an expanded position relative to the housing 100 according to an embodiment of the present disclosure. When the supporting portion 130 is at the expanded position relative to the housing 100, the supporting portion 130 serves as a grip of the electronic device 10, allowing the user to carry the electronic device 10 more easily and preventing the electronic device 10 from slipping or being damaged during carrying. At this moment, the included angle between the third portion 136 of the supporting portion 130 and the housing 100 may be an obtuse angle or a straight angle (i.e., about 180 degrees). In an embodiment where the included angle between the third portion 136 and the housing 100 is a straight angle, a surface 136S of the third portion 136 is higher than the front surface FS of the housing 100. For example, there is a distance d between the surface 136S of the third portion 136 and the front surface FS of the housing 100. In an embodiment, the surface 136S of the third portion 136 is substantially parallel to the front surface FS of the housing 100.

In such configuration, the bracket 110 and the electronic device 10 are applicable to a variety of usage scenarios. For example, in an office or a factory, the high stability of the bracket 110 helps the user to operate the electronic device 10 more conveniently, such as conducting a video conference, viewing documents, and performing multitasking. In outdoor occasions, the portable design and the high stability of the bracket 110 allow the user to easily carry the electronic device 10 and quickly and firmly place the electronic device 10 on a suitable flat surface for use when needed.

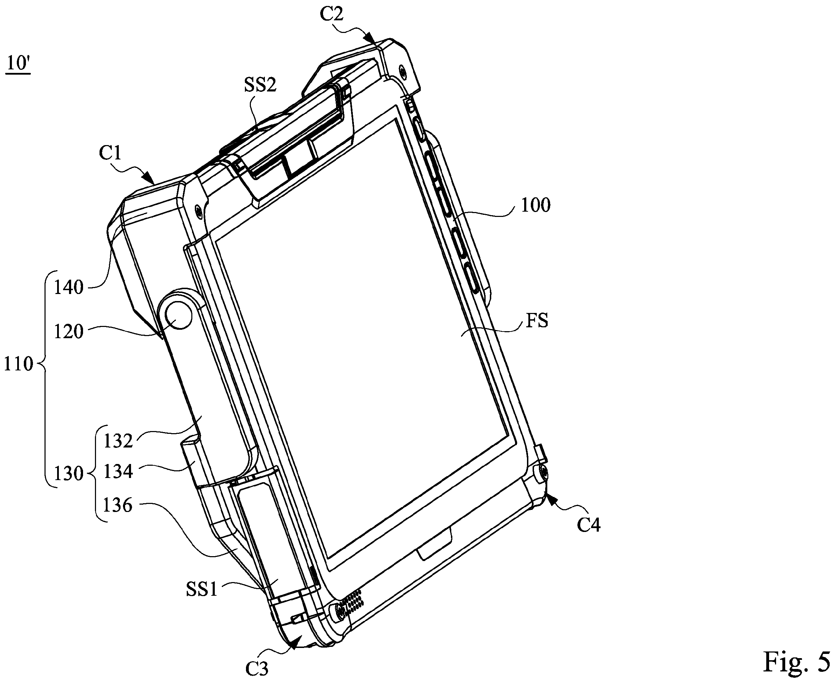

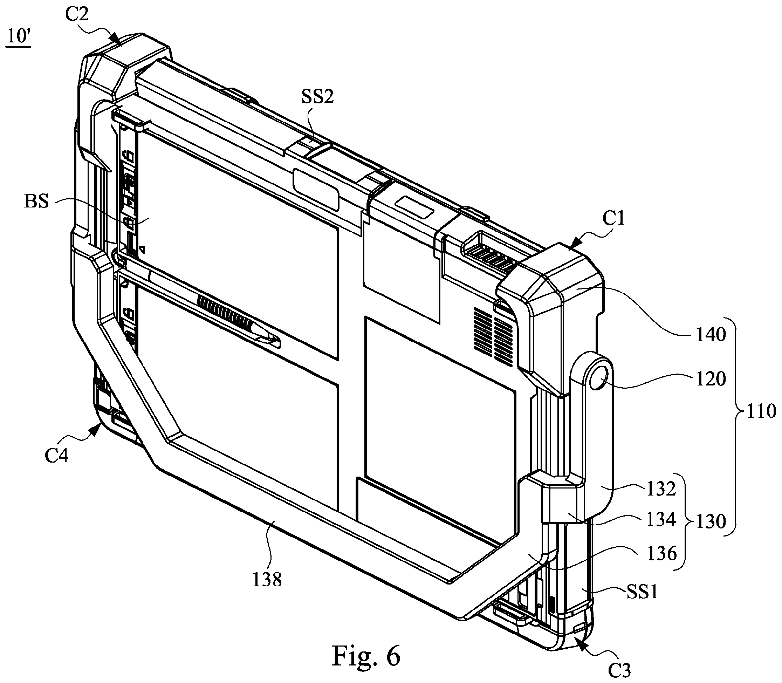

Reference is made to FIG. 5 and FIG. 6, which are perspective views of an electronic device 10' according to another embodiment of the present disclosure, shown from different viewing angles. One of the differences between the electronic device 10' and the electronic device 10 is that the bracket 110 of the electronic device 10' further includes two fixing portions 140. The two fixing portions 140 are coupled to the two pivot portions 120, respectively. Meanwhile, the two fixing portions 140 are configured to be coupled to corners of the housing 100, such as the corner C1 and the corner C2. In other words, the two pivot portions 120 of the electronic device 10' are coupled to the housing 100 through the corresponding fixing portions 140, respectively.

In greater detail, as shown in FIG. 5 and FIG. 6, the two fixing portions 140 are configured to cover the corner C1 and the corner C2 of the housing 100. For example, one of the fixing portions 140 extends from the first side surface SS1 to the second side surface SS2. In addition, in this embodiment, the fixing portions 140 may also extend from the front surface FS to the back surface BS of the housing 100. Each of the fixing portions 140 is fixed to the housing 100 through a fixing element. For example, the fixing portions 140 may be fixed to the housing 100 through screws.

Another difference between the electronic device 10' and the electronic device 10 is that the first portion 132 and the third portion 136 of the supporting portion 130 of the electronic device 10' may have lengths different from lengths of the first portion 132 and the third portion 136 of the electronic device 10, as shown in FIG. 5 and FIG. 6. In addition, the third portion 136 of the electronic device 10' may have an extension direction different from an extension direction of the third portion 136 of the electronic device 10. Those skilled in the art may make adjustments according to needs to further improve the stability of the electronic device at the support position or the portability at the expanded position, without departing from the scope of the present disclosure.

Similarly, the pivot portions 120 of the electronic device 10' are configured to rotate between about 0 degrees and about 180 degrees, so that the supporting portion 130 can be at a plurality of different positions relative to the housing 100. Embodiments of the supporting portion 130 at different positions relative to the housing 100 will be described in detail in following paragraphs.

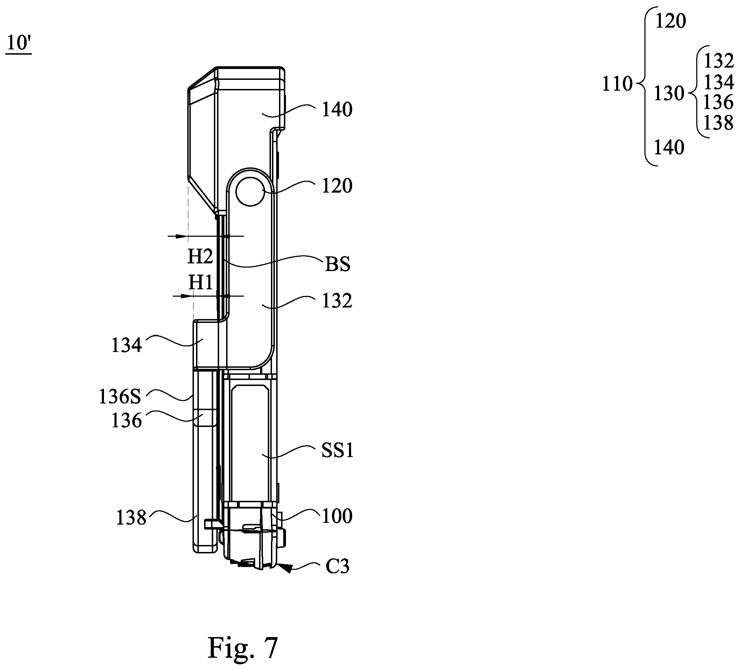

Reference is made to FIG. 7, which is a side view of the electronic device 10' when the supporting portion 130 is at a folded position relative to the housing 100 according to another embodiment of the present disclosure. When the supporting portion 130 is at the folded position relative to the housing 100, a height H2 of each of the fixing portions 140 protruding from the back surface BS is greater than or substantially equal to a height H1 of each of the third portions 136 protruding from the back surface BS. To be more specific, the fixing portions 140 serve as foot pads. By disposing the fixing portions 140 and the third portions 136, when the height H2 is substantially equal to the height H1, the electronic device 10' can be placed horizontally with the front surface FS facing upward. In an embodiment, the electronic device 10' may further include foot pads (not shown) disposed at corners of the housing 100 where no fixing portions 140 are disposed, such as the corner C3 and the corner C4. A height of each of the foot pads protruding from the back surface BS may be substantially equal to the height H2 of each of the fixing portions 140 protruding from the back surface BS, so that the electronic device 10' can be placed horizontally on a flat surface more stably with the front surface FS facing upward. In addition, the fixing portions 140 and the foot pads (not shown) can also be used to protect the electronic device 10' and prevent the electronic device 10' from being damaged due to an accidental fall. In an embodiment, a hardness of each of the fixing portions 140 is lower than a hardness of the housing 100 to provide a buffering elastic force. In an embodiment, the fixing portions 140 are formed by, for example, double injection molding. To be more specific, the fixing portions 140 are made of a hard plastic material partially covered by a soft rubber material, for example.

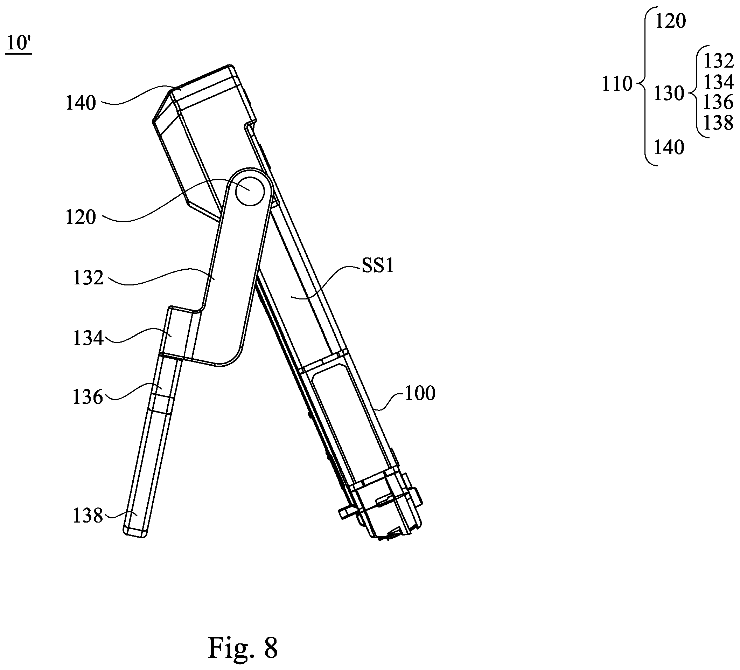

Reference is made to FIG. 8, which is a side view of the electronic device 10' when the supporting portion 130 is at a supporting position relative to the housing 100 according to another embodiment of the present disclosure. Similarly, when the supporting portion 130 is at the supporting position relative to the housing 100, the supporting portion 130 abuts against a flat surface such as a desktop or a suitable countertop through the third portion 136 and the fourth portion 138 to serve as a stand of the electronic device 10'. At this moment, the included angle between the third portion 136 of the supporting portion 130 and the housing 100 is an acute angle.

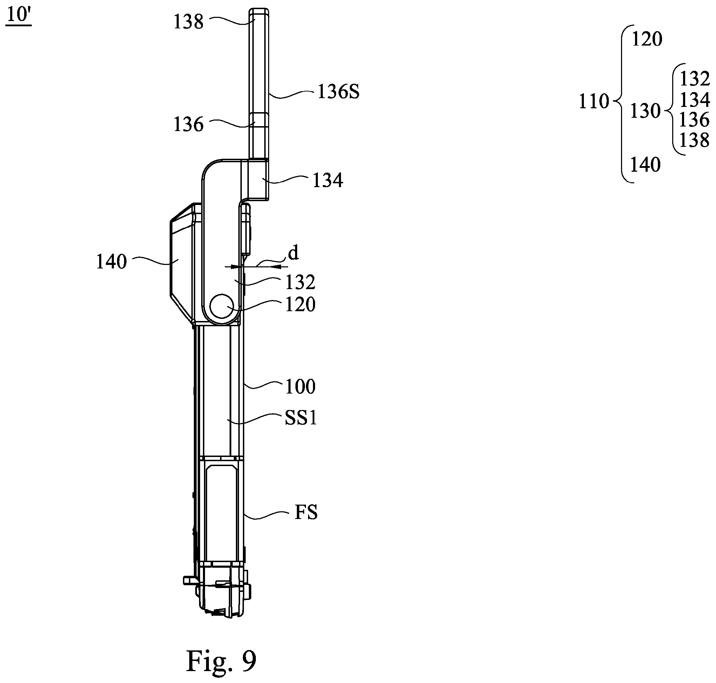

Reference is made to FIG. 9, which is a side view of the electronic device 10' when the supporting portion 130 is at an expanded position relative to the housing 100 according to another embodiment of the present disclosure. Similarly, when the supporting portion 130 is at the expanded position relative to the housing 100, the supporting portion 130 serves as a handle or grip of the electronic device 10'. At this moment, the included angle between the third portion 136 of the supporting portion 130 and the housing 100 may be an obtuse angle or a straight angle. In an embodiment where the included angle between the third portion 136 and the housing 100 is a straight angle, the surface 136S of the third portion 136 is higher than the front surface FS of the housing 100 and has a distance d therebetween. In addition, the surface 136S of the third portion 136 may be substantially parallel to the front surface FS of the housing 100.

According to the foregoing recitations of the embodiments of the disclosure, it may be seen that in the bracket and the electronic device of some embodiments of the present disclosure, by coupling the supporting portion of the bracket to the corners of the housing of the electronic device (such as the upper left corner and the upper right corner) and allowing the supporting portion to be at a plurality of different positions relative to the housing 100, the electronic device can have a highly stable support to prevent the electronic device from tipping over or sliding when the bracket is used as a stand of the electronic device. At the same time, this design also allows the bracket to be used as a grip of the electronic device, making it convenient for the user to use when carrying the electronic device. Compared with common brackets and electronic devices, the bracket and the electronic device of the present disclosure are suitable for various usage scenarios, such as offices, factories, and outdoor occasions, which not only improve the stability of the electronic device, but also increase its portability and flexibility of use.

## Claims

1. A bracket (110), comprising:
a pivot portion (120) rotatably coupled to a side surface (SS1, SS2) of a housing (100) of an electronic device (10, 10'); and
a supporting portion (130) coupled to the housing (100) through the pivot portion (120), wherein the supporting portion (130) has a first portion (132), a second portion (134), and a third portion (136), the first portion (132) is connected to the pivot portion (120), and the second portion (134) connects the first portion (132) and the third portion (136), wherein when the supporting portion (130) is at a folded position relative to the housing (100), the first portion (132) is on the side surface (SS1, SS2) of the housing (100), and the third portion (136) is on a back surface (BS) of the housing (100).

2. The bracket (110) of claim 1, wherein the pivot portion (120) is configured to rotate between about 0 degrees and about 180 degrees.

3. The bracket (110) of claim 1, wherein the first portion (132) and the third portion (136) extend in opposite directions relative to the second portion (134).

4. The bracket (110) of claim 1, wherein the first portion (132) is substantially perpendicular to the third portion (136).

5. The bracket (110) of any one of claims 1 to 4, further comprising a fixing portion (140) coupled to the pivot portion (120) and configured to be coupled to a corner (C1, C2) of the housing (100).

6. An electronic device (10, 10'), comprising:
a housing (100) having a back surface (BS) and having a first side surface (SS1) and a second side surface (SS2) adjacent to each other; and
a bracket (110) coupled to the housing (100), comprising:
a first pivot portion (120) on the first side surface (SS1) and rotatably coupled to the housing (100); and
a supporting portion (130) coupled to the housing (100) through the first pivot portion (120), wherein the supporting portion (130) has at least one first portion (132), at least one second portion (134), and at least one third portion (136), wherein a first one of the at least one first portion (132) is connected to the first pivot portion (120), a first one of the at least one second portion (134) connects the first one of the at least one first portion (132) and a first one of the at least one third portion (136), and when the supporting portion (130) is at a folded position relative to the housing (100), the first one of the at least one first portion (132) is on the first side surface (SS1), and the first one of the at least one third portion (136) is on the back surface (BS).

7. The electronic device (10') of claim 6, wherein the bracket (110) further comprises a fixing portion (140), wherein the fixing portion (140) extends from the first side surface (SS1) to the second side surface (SS2), and the first pivot portion (120) is coupled to the housing (100) through the fixing portion (140).

8. The electronic device (10') of claim 7, wherein the fixing portion (140) extends from a front surface (FS) of the housing (100) to the back surface (BS), wherein the front surface (FS) is opposite to the back surface (BS).

9. The electronic device (10') of claim 8, wherein a height (H2) of the fixing portion (140) protruding from the back surface (BS) is greater than or substantially equal to a height (H1) of the first one of the at least one third portion (136) protruding from the back surface (BS).

10. The electronic device (10, 10') of claims 6 or 7, wherein when the supporting portion (130) is at an expanded position relative to the housing (100), a surface (136S) of the first one of the at least one third portion (136) is higher than a front surface (FS) of the housing (100), wherein the front surface (FS) is opposite to the back surface (BS).

11. The electronic device (10, 10') of claim 10, wherein the surface (136S) of the first one of the at least one third portion (136) is substantially parallel to the front surface (FS) of the housing (100), and a distance (d) is between the surface (136S) of the first one of the at least one third portion (136) and the front surface (FS) of the housing (100).

12. The electronic device (10, 10') of claims 6 or 7, wherein when the supporting portion (130) is at a supporting position relative to the housing (100), the electronic device (10, 10') abuts against a flat surface through the at least one third portion (136).

13. The electronic device (10, 10') of any one of claims 6, 7, and 8, wherein the bracket (110) further comprises a second pivot portion (120) rotatably coupled to the housing (100), and the supporting portion (130) further has a fourth portion (138), wherein the at least one first portion (132) is a plurality of first portions (132), the at least one second portion (134) is a plurality of second portions (134), and the at least one third portion (136) is a plurality of third portions (136), wherein a second one of the plurality of first portions (132) is connected to the second pivot portion (120), a second one of the plurality of second portions (134) connects the second one of the plurality of first portions (132) and a second one of the plurality of third portions (136), and the fourth portion (138) connects the first one and the second one of the plurality of third portions (136).

14. The electronic device (10) of claim 13, wherein when the supporting portion (130) is at the folded position relative to the housing (100), the first one and the second one of the plurality of third portions (136) are on the back surface (BS) and extend along a lengthwise direction (D1) of the first side surface (SS1), and the fourth portion (138) is on the back surface (BS) and extends along a lengthwise direction (D2) of the second side surface (SS2).

15. An electronic device (10, 10'), comprising:
a housing (100) having a back surface (BS) and having a first side surface (SS1) and a second side surface (SS2) adjacent to each other; and
a bracket (110) coupled to the housing (100), comprising:
a pivot portion (120) on the first side surface (SS1) and rotatably coupled to the housing (100); and
a supporting portion (130) coupled to the housing (100) through the pivot portion (120), wherein when the supporting portion (130) is at a folded position relative to the housing (100), at least one portion (132) of the supporting portion (130) is on the first side surface (SS1), and another portion (136, 138) of the supporting portion (130) is on the back surface (BS).
